# EUROPEAN PATENT APPLICATION

(11) **EP 3 806 262 A1**
(43) Date of publication of application: **14.04.2021**
(21) Application number: 18920935.6
(22) Date of filing: 31.05.2018
(51) Int. Cl.: H02J 3/36, H02J 1/00, H02J 13/00

(54) **CONTROL DEVICE AND POWER CONVERSION DEVICE**

(71) Applicant: TOSHIBA MITSUBISHI-ELECTRIC INDUSTRIAL SYSTEMS CORPORATION, Chuo-ku Tokyo 104-0031 (JP)
(72) Inventor: HATTORI, Keisuke, Tokyo 104-0031 (JP); OKAMI, Tomohisa, Tokyo 104-0031 (JP)
(74) Representative: Winter, Brandl - Partnerschaft mbB
(86) International application number: PCT/JP2018/020930
(87) International publication number: WO 2019/229922

(57) **Abstract**

According to an embodiment of the invention, a control device capable of controlling a power converter connected to one terminal of a direct current power transmission system and capable of receiving, via a communication network, data of a direct current voltage actually measured at another terminal of the direct current power transmission system is provided. The control device includes a first controller, a second controller, and a drive signal generator. The first controller includes a first arithmetic unit generating a first control output based on a voltage drop of the one terminal, a voltage command value of the other terminal, and a first direct current voltage of the one terminal. The second controller includes a second arithmetic unit generating a second control output based on the voltage command value and a second direct current voltage of the other terminal. The drive signal generator generates a drive signal of the power converter based on the first and second control outputs. A response speed of the second arithmetic unit is set according to a transmission delay time of the communication network. A response speed of the first arithmetic unit is set to be faster than the response speed of the second arithmetic unit.

## Description

### [Technical Field]

An embodiment of the invention relates to a control device and a power conversion device.

### [Background Art]

In a direct current power transmission system, there are cases where a configuration is employed in which the direct current voltage of the power transmission end (the REC end) is controlled using the direct current of the power receiving end (the INV end). Thus, when controlling the direct current voltage of the opposite end, it is necessary to transfer the direct current voltage detected values of the terminals between the terminals by high-speed communication to increase the accuracy and the responsiveness of the control.

Because a dedicated communication line is necessary for the high-speed communication between the terminals, the installation cost of the communication line is expensive compared to a system performing the communication between the terminals with a general-purpose communication line.

Also, there are cases where the direct current voltage of the opposite end is estimated using an estimated value of the direct current resistance of the power line and the direct current voltage of it's own end without using a high-speed communication line. In such a case, an error is included between the estimated value and the actual direct current voltage value; when the error is large, there is a risk that the operation of the system may be difficult to continue.

### [Citation List]

### [Patent Literature]

Patent Literature 1: JP-B 3506881

### [Summary of Invention]

### [Technical Problem]

Embodiments of the invention provide a control device and a power conversion device that are connected to a direct current power transmission system and can be operated without using a high-speed communication line.

### [Solution to Problem]

According to an embodiment of the invention, a control device capable of controlling a power converter connected to one terminal of a direct current power transmission system transmitting power by a direct current power line and capable of receiving, via a communication network, data of a direct current voltage actually measured at another terminal of the direct current power transmission system is provided. The control device includes a first controller, a second controller, and a drive signal generator. The first controller includes a first arithmetic unit generating a first control output based on a voltage drop, a voltage command value, and a first direct current voltage; the voltage drop is with respect to a voltage of the other terminal estimated based on an estimated value of a direct current resistance of the direct current power line; the voltage command value sets a direct current voltage of the other terminal; and the first direct current voltage is a direct current voltage of the one terminal. The second controller includes a second arithmetic unit generating a second control output based on the voltage command value and a second direct current voltage, and the second direct current voltage is a direct current voltage actually measured at the other terminal. The drive signal generator generates a drive signal of the power converter based on the first and second control outputs. A response speed of the second arithmetic unit is set according to a transmission delay time of the communication network. A response speed of the first arithmetic unit is set to be faster than the response speed of the second arithmetic unit.

### [Effects of the Invention]

According to embodiments of the invention, the response speed of the second arithmetic unit can be set according to the transmission delay time of the communication network, and the response speed of the first arithmetic unit can be set to be faster than the response speed of the second arithmetic unit; therefore, the direct current voltage of the power transmission end can be controlled with high accuracy regardless of a high-speed communication line.

### [Brief Description of Drawings]

[FIG. 1]

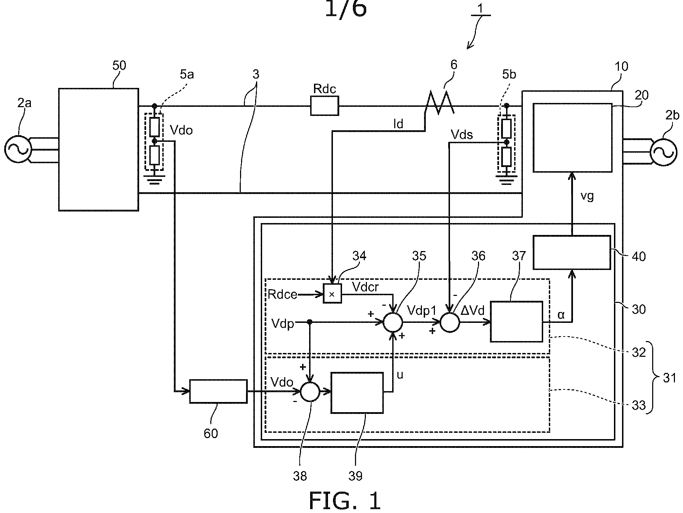

   FIG. 1 is a block diagram illustrating a power conversion device according to a first embodiment.
[FIG. 2]

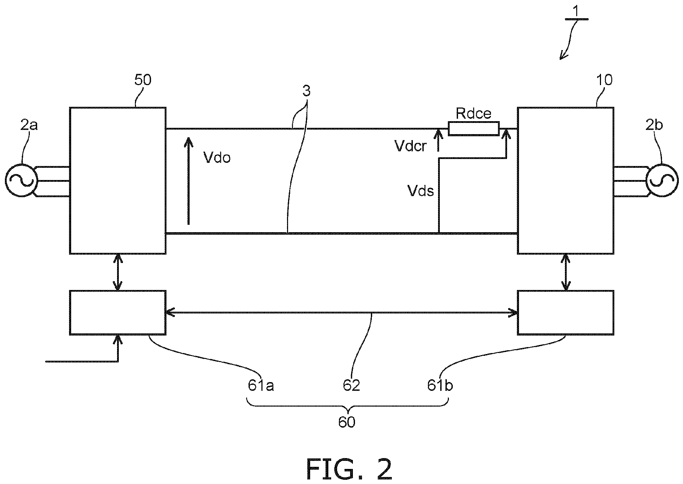

   FIG. 2 is a block diagram illustrating a direct current power transmission system.
[FIG. 3]

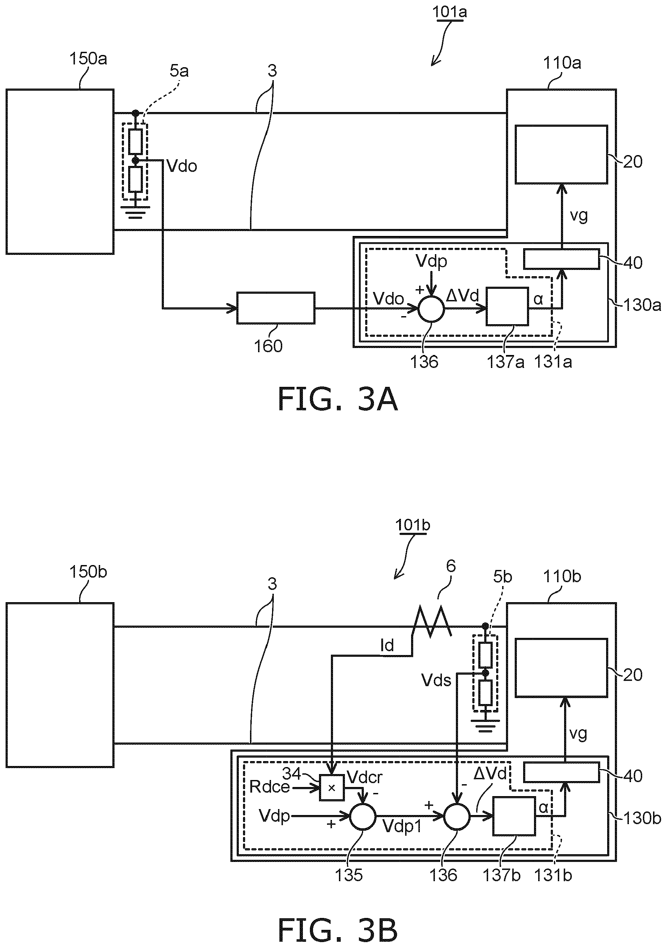

   FIGS. 3A and 3B show the direct current power transmission systems and the power conversion devices of the comparative examples.
[FIG. 4]

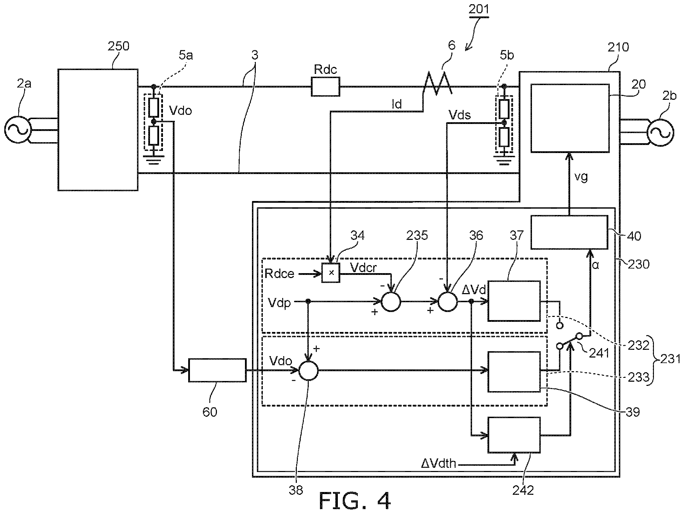

   FIG. 4 is a block diagram illustrating a power conversion device according to a second embodiment.
[FIG. 5]

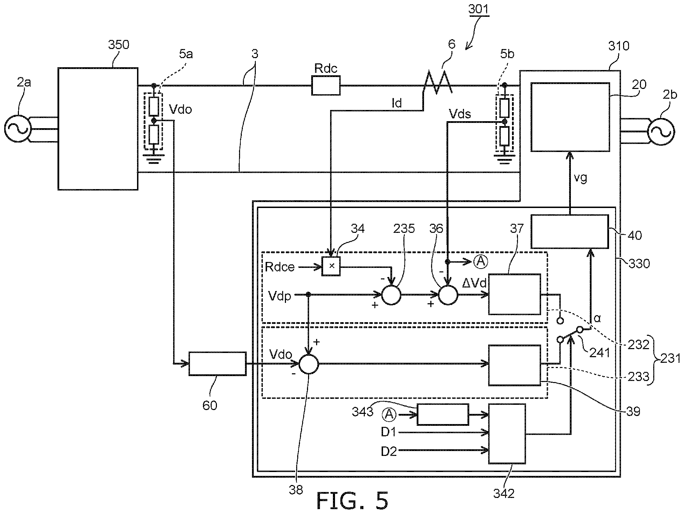

   FIG. 5 is a block diagram illustrating a power conversion device according to a third embodiment.
[FIG. 6]

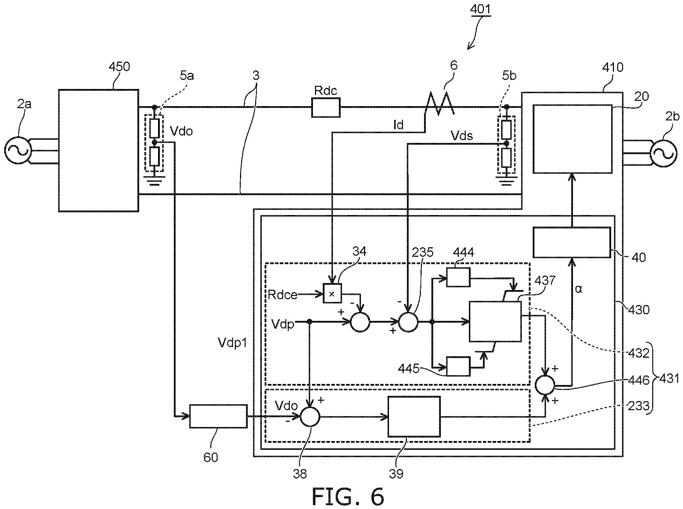

   FIG. 6 is a block diagram illustrating a power conversion device according to a fourth embodiment.

### [Description of Embodiments]

Various embodiments are described below with reference to the accompanying drawings.

The drawings are schematic and conceptual; and the relationship between the thickness and width of the portions, the proportions of sizes among portions, etc., are not necessarily the same as the actual values. Also, the dimensions and proportions may be illustrated differently among drawings, even when the same portion is illustrated.

In the specification and drawings, components similar to those described previously or illustrated in an antecedent drawing are marked with the same reference numerals, and a detailed description is omitted as appropriate.

### (First embodiment)

FIG. 1 is a block diagram illustrating a power conversion device according to the embodiment.

The configuration of a direct current power transmission system 1 also is shown in FIG. 1. As shown in FIG. 1, the direct current power transmission system 1 includes two power conversion devices 10 and 50 and a direct current power line 3. The power conversion device 10 is connected between the direct current power line 3 and an alternating current circuit 2b. The power conversion device 50 is connected between an alternating current circuit 2a and the direct current power line 3. For example, the alternating current circuits 2a and 2b each can have configurations including an alternating current power supply, an alternating current power line, an alternating current load, etc., of 50 Hz or 60 Hz. The alternating current circuits 2a and 2b can be different power systems.

In the example, one power conversion device 50 is connected to the power transmission end that transmits direct current power, and the other power conversion device 10 is connected to the power receiving end that receives the direct current power. In the direct current power transmission system 1, the transmission of bidirectional direct current power is possible, and the terminal to which the power conversion device 50 is connected can be used as the power receiving end; in such a case, the terminal to which the power conversion device 10 is connected can be used as the power transmission end. The power conversion devices 10 and 50 have the same configuration, and the configuration of the power conversion device 10 is described below.

Although a direct current power transmission system that includes two terminals is described hereinbelow, the power conversion device is applicable to a multi-terminal direct current power transmission system including three or more terminals in all of the embodiments.

The power conversion device 10 includes a power converter 20 and a control device 30. The power converter 20 converts the transmitted direct current voltage into an alternating current voltage and outputs the alternating current voltage according to a gate signal vg generated by the control device 30. The power converter 20 is, for example, a thyristor valve, and the description hereinbelow is for a thyristor valve. The power converter is not limited to a separately-excited converter such as a thyristor valve and may be a self-commutated inverter circuit.

The control device 30 generates the gate signal vg based on direct current voltages Vds and Vdo and a direct current Id and supplies the generated gate signal vg to the power converter 20. The direct current voltage Vds is the actual measured value of the direct current terminal voltage of the power conversion device 10 of the power receiving end. The direct current voltage Vds is detected by a direct current voltage detector 5b. The direct current voltage Vdo is the actual measured value of the direct current terminal voltage of the power conversion device 50 of the power transmission end. The direct current voltage Vdo is detected by a direct current voltage detector 5a. The direct current Id is the actual measured value of the current flowing through the direct current power line 3. The direct current Id is detected by a direct current detector 6.

The control device 30 includes an automatic voltage regulator (AVR) 31. The control device 30 includes a phase controller 40 connected to the AVR 31, and the phase controller (the drive signal generator) 40 generates the gate signal vg based on a signal α relating to the control angle of the thyristor from the AVR 31. For example, the signal α has a large value according to the control angle, and in the phase controller 40, generates the gate signal to increase the control angle of the thyristor.

The AVR 31 includes two controllers 32 and 33. As elaborated below, the controller 32 forms a control loop corresponding to a fast response, and the controller 33 forms a control loop having a lower speed than the control loop of the controller 32. The response speed of the controller 33 is set according to the transmission delay time of a communication network 60. The communication network 60 is a general-purpose communication network and does not always guarantee the constant periodicity, the transmission delay time, etc., of the data transmission.

The controller 33 receives the input of the direct current voltage Vdo and a direct current voltage command value Vdp and generates a control output (a second control output) u for the controller 32. The control output u corrects the control output of the controller 32. The data of the direct current voltage Vdo is transmitted to the power receiving end from the power transmission end via the communication network 60. The direct current voltage command value Vdp is preset and is, for example, the rated value of the direct current voltage at the power transmission end.

The controller 32 generates a control output (a first control output) based on the direct current voltage Vds of the power receiving end, the estimated value of the voltage drop of the direct current power line 3, and the direct current voltage command value Vdp and outputs the signal α relating to the control angle. The estimated value of the voltage drop is determined based on the direct current Id and the direct current line resistance estimated value Rdce. The direct current line resistance estimated value Rdce is an estimated value of the direct current resistance Rdc of the direct current power line 3 and is preset. Hereinbelow, the direct current voltage command value Vdp also is called simply the voltage command value Vdp, and the direct current line resistance estimated value Rdce also is called simply the resistance value Rdce.

Configuration examples of the controllers 32 and 33 will now be described in detail.

The controller 32 includes a multiplier 34, adder-subtracters 35 and 36, and an arithmetic unit 37.

The resistance value Rdce and the actual measurement data of the direct current Id are input to the multiplier 34. The multiplier 34 outputs the arithmetic result of *Id×Rdce. Id×Rdce* represents a voltage drop Vdcr due to the resistance value Rdce. Because the resistance value Rdce is an estimated value, the voltage drop Vdcr also is an estimated value.

The voltage drop Vdcr, the voltage command value Vdp, and the control output u are input to the adder-subtracter 35. The adder-subtracter 35 outputs a difference Vdp1 between *Vdp* and (*Vdcr* - *u*) and supplies the output difference Vdp1 to the adder-subtracter 35. The difference Vdp1 is the converted value of the voltage command value Vdp at the power receiving end. The converted value of the voltage command value corresponds to the direct current voltage Vdo of the power transmission end considering the voltage drop Vdcr due to the direct current power line 3.

The difference Vdp1 and the direct current voltage Vds are input to the adder-subtracter 36. The adder-subtracter 36 calculates a deviation ΔVd between the difference Vdp1 and the direct current voltage Vds and supplies the deviation ΔVd to the arithmetic unit 37.

For example, the arithmetic unit 37 performs a primary delay calculation. The arithmetic unit 37 performs the primary delay calculation of the deviation ΔVd and generates the signal α relating to the control angle. The response speed of the arithmetic unit 37 is set to be sufficiently fast to be able to track an abrupt change of the direct current voltages Vds and Vdo including commutation failures, etc. When the arithmetic unit 37 is a primary delay arithmetic unit, it is favorable for the primary delay time constant to have a sufficiently small value. The arithmetic unit 37 is not limited to an arithmetic unit that performs a primary delay calculation and may be, for example, a PI controller, etc. For a PI controller, it is favorable for the integration constant to have a sufficiently large value to track an abrupt change of the direct current voltages Vds and Vdo.

The controller 33 includes an adder-subtracter 38 and an arithmetic unit 39. The data of the voltage command value Vdp and the data of the direct current voltage Vdo are input to the adder-subtracter 38. The data of the direct current voltage Vdo is transmitted via the communication network 60. The communication network 60 is a general-purpose communication network and may include, for example, a line of the Internet or the like that uses a general-purpose Ethernet (registered trademark). The adder-subtracter 38 supplies the deviation between the voltage command value Vdp and the direct current voltage Vdo to the arithmetic unit 39.

For example, the arithmetic unit 39 performs a primary delay calculation. The arithmetic unit 39 generates the control output u by performing a primary delay calculation of the deviation. The arithmetic unit 39 is not limited to a primary delay arithmetic unit and may be a PI controller, etc. The response speed of the arithmetic unit 39 is set according to the transmission delay time of the communication network 60. The response speed of the arithmetic unit 39 may be set to be slow compared to the response speed of the arithmetic unit 37.

The controller 32 can respond to an abrupt change of the direct current voltages Vds and Vdo and can obtain a sufficient control response for disturbances such as an abrupt change of the direct current voltage in the startup or stop of the power conversion devices 10 and 50, in power flow reversal, due to a commutation failure, etc.

The controller 33 can perform voltage control with high accuracy because the direct current voltage Vdo of the power transmission end that is used is actually measured. By using the control output u to correct the output of the controller 32, the error when estimating the direct current voltage Vdo of the power transmission end in the controller 32 can be corrected.

In the description described above, an example is described in which the control output u that is generated by the controller 33 is added simultaneously with *Vdp* and *Vdcr* by the adder-subtracter 35; however, the position of the addition is not limited thereto as long as the correction by the control output u is performed before the signal is input to the arithmetic unit 37. For example, the addition may be performed after calculating the difference between *Vdp* and *Vdcr* and before calculating the deviation by the adder-subtracter 36, or the addition may be performed after calculating the deviation by the adder-subtracter 36.

The components described above for the control device 30 including the AVR 31 may be realized by an arithmetic device including a CPU (Central Processing Unit), an MPU (Micro Processing Unit), etc. Some or all of the components described above may be realized by being sequentially executed by a program stored in a memory device connected to the arithmetic device. This is similar for the other embodiments described below as well.

Effects of the power conversion device of the embodiment will now be described while comparing to a power conversion device of a comparative example.

FIG. 2 is a block diagram illustrating a direct current power transmission system.

As shown in FIG. 2, the communication network 60 of the direct current power transmission system 1 includes communication devices 61a and 61b and a communication line 62. The communication devices 61a and 61b are installed at the two terminals of the direct current power transmission system 1. The communication devices 61a and 61b can transmit data, commands, etc., mutually via the communication line 62. The data, the commands, etc., from a control system, which is a higher level of the direct current power transmission system 1, are transmitted to at least one of the communication device 61a or 61b.

According to the data, the commands, etc., transmitted and received via the communication network 60, the power conversion devices 10 and 50 startup, stop, perform power flow reversal, transmit direct current power corresponding to the voltage command value and the current command value, etc.

Describing now an example more specifically, to perform direct current power transmission, the power conversion device 50 of the power transmission end performs direct current control (ACR), and the power conversion device 10 of the power receiving end performs direct current voltage control (AVR). To increase the efficiency of the power transmission to the utmost, it is favorable for the power conversion device 50 of the power transmission end to transmit power at the rated voltage. In the power conversion device 10 of the power receiving end, direct current voltage control of the direct current voltage Vdo of the power transmission end to the voltage command value Vdp is performed so that the direct current voltage Vdo of the power transmission end does not exceed the rated voltage.

When performing direct current power transmission, the direct current power line 3 has a direct current resistance portion; therefore, the direct current voltage Vds of the power receiving end has a voltage drop Vdcr corresponding to the transmitted direct current Id and the resistance value Rdce of the direct current power line 3. Because the resistance value Rdce is an estimated value, the voltage drop Vdcr also is an estimated value; the voltage control that is based on data acquired at the power receiving end side includes an error. Accordingly, in the power conversion device 10 of the power receiving end, it is favorable to perform a control so that the direct current voltage Vdo of the power transmission end that is actually measured tracks the voltage command value Vdp.

On the other hand, the length of the direct current power line 3 is the distance between the AC-DC conversion stations at which the power conversion devices 10 and 50 are installed, and there are cases where the length is several 10 km to several 100 km. Therefore, the communication devices 61a and 61b are installed at the two AC-DC conversion stations; and the data of both, commands from the higher-level control system, etc., are transmitted and received via the communication line 62 provided between the communication devices 61a and 61b. In the power conversion device 10 of the power receiving end, it is necessary to receive the data of the direct current voltage Vdo of the power transmission end via a communication line.

The normal direct current voltage undergoes constant voltage control to the rated voltage; therefore, an abrupt change of the direct current voltage does not occur. It is necessary for the normal direct current voltage to be controlled to track the rated value with high accuracy by direct current voltage control.

The direct current voltage transiently fluctuates in the startup or stop of the power conversion devices 10 and 50, in power flow reversal, due to commutation failure, etc. To respond to the transient fluctuation of the direct current voltage, it is necessary for the power conversion device 10 to quickly control the direct current voltage to track the transient fluctuation of the voltage.

FIGS. 3A and 3B are block diagrams illustrating power conversion devices of comparative examples.

FIGS. 3A and 3B show the direct current power transmission systems and the power conversion devices of the comparative examples.

As shown in FIG. 3A, a direct current power transmission system 101a includes power conversion devices 110a and 150a. The power conversion devices 110a and 150a are connected by the direct current power line 3. The power conversion device 150a is the power conversion device of the power transmission end, and the power conversion device 110a is the power conversion device of the power receiving end. Similarly to the first embodiment described above, the power conversion device 150a can be connected to the terminal used as the power receiving end; in such a case, the power conversion device 110a can be connected to the terminal used as the power transmission end. This is similar for the following comparative examples as well.

The power conversion device 110a includes a control device 130a. For example, the control device 130a controls the power converter 20, which is a thyristor valve. The control device 130a includes an AVR 131a. The AVR 131a includes an adder-subtracter 136 and an arithmetic unit 137a.

The voltage command value Vdp and the direct current voltage Vdo are input to the adder-subtracter 136. The adder-subtracter 136 supplies the deviation ΔVd between the voltage command value Vdp and the direct current voltage Vdo to the arithmetic unit 137a. The arithmetic unit 137a generates the signal α relating to the control angle to set the deviation ΔVd to 0. The arithmetic unit 137a may be a primary delay arithmetic unit or may be a PI controller, etc.

In order for the AVR 131a to respond to the transient fluctuation of the direct current voltage Vdo, the direct current voltage Vdo is transmitted via a high-speed communication network 160 in which data transmission is possible in which the constant periodicity and/or the transmission delay time are guaranteed. Also, the response speed of the arithmetic unit 137a of the AVR 131a is set according to the transmission speed of the high-speed communication network 160.

For a comparative example such as that described above, because the high-speed communication network 160 is used in the data transmission between the power transmission end and the power receiving end, there is a tendency for the installation cost, the operation cost, etc., of the high-speed communication network 160 to be expensive. When used in a power system of a main system such as a direct current power transmission system, security measures such as providing redundancy, etc., are taken based on the assumption of a failure of the high-speed communication network 160; considering such security measures, there is a risk that the cost burden of the high-speed communication network 160 may further increase.

Power conversion devices that realize sufficient responsiveness without using an expensive high-speed communication network are being put into practical use. In the comparative example of FIG. 3B, voltage control is performed by estimating the direct current voltage Vdo of the power transmission end by using the resistance value Rdce and the direct current voltage Vds of the power receiving end.

A direct current power transmission system 101b includes power conversion devices 110b and 150b. The power conversion devices 110b and 150b are connected by the direct current power line 3. The power conversion device 110b of the power receiving end includes a control device 130b. The control device 130b includes an AVR 131b that is different from that of the comparative example described above. The AVR 131b includes the multiplier 34, adder-subtracters 135 and 136, and an arithmetic unit 137b.

The data of a detected direct current Id and the data of a preset resistance value Rdce are input to the multiplier 34. The multiplier 34 multiplies the direct current Id and the resistance value Rdce and outputs the voltage drop Vdcr due to the direct current power line 3. Because the resistance value Rdce that is used is an estimated value, the voltage drop Vdcr is an estimated value.

The data of the voltage drop Vdcr and the voltage command value Vdp are input to the adder-subtracter 135. The adder-subtracter 135 outputs the direct current voltage command value Vdp1 that considers the voltage drop Vdcr, and supplies the output to the adder-subtracter 136.

The adder-subtracter 136 calculates a deviation ΔVd1 between the direct current voltage Vds of the power receiving end and the voltage command value Vdp1 that considers the voltage drop Vdcr, and supplies the deviation ΔVd1 to the arithmetic unit 137b.

The arithmetic unit 137b generates the signal α relating to the control angle to cause the deviation Vd1 to be zero.

In the comparative example, the AVR 131b does not obtain the data of the direct current voltage to be controlled from the power transmission end. Instead, the AVR 131b acquires the data of the direct current voltage Vds of the power receiving end. Therefore, it is possible to construct a direct current power transmission system with the power conversion device 110b without providing a high-speed communication network.

However, the AVR 131b estimates the voltage difference between the direct current voltages Vdo and Vds of the power transmission end and the power receiving end by using the voltage drop Vdcr due to the resistance value Rdce. For example, the estimated value Rdce is determined by multiplying the direct current resistance value per unit length of the direct current power line 3 by the length of the power line. Therefore, the voltage command value Vdp1 that considers the voltage drop Vdcr includes at least an error accompanying the estimation of the line resistance value.

Accordingly, in the comparative example, the accuracy of the direct current voltage control of the power conversion device 110b of the power receiving end decreases. Also, the direct current voltage Vdo of the power transmission end cannot exceed the rated direct current voltage; therefore, by considering the error, the direct current voltage command value Vdp1 that considers the voltage drop portion must be set to a lower value, and there is a risk that the power transmission efficiency may decrease.

Unlike these comparative examples, the power conversion device 10 of the embodiment includes the two controllers 32 and 33. The controller 32 forms a control loop capable of a fast response. In the controller 32, the arithmetic unit 37 quickly performs the direct current voltage control based on the direct current voltage Vds that is detected at the power receiving end and the direct current voltage Vdo of the power transmission end that is estimated. Therefore, even when a disturbance causes an abrupt change of the direct current voltage such as at startup or the like, the power conversion device 10 can perform the direct current voltage control to respond to the disturbance.

In the direct current power transmission system 1, the controller 33 forms a control loop having a slower response than the control loop of the controller 32. In the controller 33, the arithmetic unit 39 generates the control amount u based on the voltage command value Vdp and the direct current voltage Vdo of the power transmission end that is actually measured and acquired via the communication network 60. The control amount u that is generated has a value that reflects the direct current voltage Vdo of the power transmission end.

The control amount u that is generated by the controller 33 is supplied to the controller 32 and used to correct the direct current voltage command value Vdp1 considering the estimated value of the voltage drop Vdcr based on the estimated value Rdce. Because the control amount u reflects the direct current voltage Vdo of the power transmission end, the error of the voltage drop due to the direct current power line 3 can be corrected, and the accuracy of the direct current voltage control can be increased. Because the transient fluctuation of the direct current voltage is tracked by the controller 32, it is sufficient for the response speed of the controller 33 to be set according to the transfer delay of the communication network 60.

Because the accuracy of the direct current voltage control can be increased by the controller 33, the direct current voltage Vdo of the power transmission end can be set to the rated direct current voltage with high accuracy, and the power transmission efficiency can be increased.

It is sufficient for the response of the controller 33 to be enough to track the normal voltage control response; also, the transmission speed of the communication network 60 does not require constant periodicity, etc. Therefore, the cost of constructing the communication network 60 can be reduced, and the operation cost, etc., also can be reduced.

### (Second embodiment)

FIG. 4 is a block diagram illustrating a power conversion device according to the embodiment.

As shown in FIG. 4, a direct current power transmission system 201 includes power conversion devices 210 and 250. The power conversion device 210 is connected to the power receiving end, and the power conversion device 250 is connected to the power transmission end. Similarly to the first embodiment, the terminal to which the power conversion device 210 is connected can be used as the power transmission end; in such a case, the terminal to which the power conversion device 250 is connected is used as the power receiving end. This is similar for the other embodiments described below as well.

The power conversion device 210 includes a control device 230. The control device 230 includes an AVR 231. In the control device 230, the configuration of a portion of the AVR 231 is different from those of the other embodiments described above, and the rest of the configuration is the same. Similarly, for the other embodiments described below as well, the same components are marked with the same reference numerals, and a detailed description is omitted as appropriate.

The AVR 231 includes controllers 232 and 233. The controllers 232 and 233 are provided in parallel, and the outputs of the controllers 232 and 233 are switched by a switcher 241. According to the output of a comparator 242, the switcher 241 supplies the output of the controller 232 or the output of the controller 233 to the phase controller 40.

The comparator 242 is connected to the output of the adder-subtracter 36. The output of the adder-subtracter 36 is also connected to the input of the arithmetic unit 37. When the deviation ΔVd is less than a preset threshold ΔVdth, the comparator 242 supplies the output of the controller 232 to the phase controller 40. When the deviation ΔVd is not less than the threshold ΔVdth, the comparator 242 supplies the output of the controller 233 to the phase controller 40. The threshold ΔVdth is set by determining an appropriate value by experiment, simulation, etc.

In the embodiment, the controllers 232 and 233 do not simultaneously operate because the outputs of the controllers 232 and 233 are appropriately switched. Therefore, the interference that may be caused by the setting of the response speeds can be avoided.

### (Third embodiment)

FIG. 5 is a block diagram illustrating a power conversion device according to the embodiment.

As shown in FIG. 5, a direct current power transmission system 301 includes power conversion devices 310 and 350. The power conversion device 310 includes a control device 330. In the control device 330, the configuration of the AVR 231 is the same as that of the second embodiment described above, but the control device 330 differs from that of the second embodiment described above in that the control device 330 includes an OR circuit 342.

In the embodiment, the OR circuit 342 receives input of multiple logical values. In the example, three logical values are input; when at least one logical value is the H level (the logical value = "1"), the output of the controller 232 is supplied to the phase controller 40 by the switcher 241. When all of the three logical values are the L level (the logical value = "0"), the output of the controller 233 is supplied to the phase controller 40 by the switcher 241.

One of the three logical values is a signal D1 that is set to the H level when at least one of the power conversion device 310 or 350 is in the startup or when stopped. Another one of the three logical values is a signal D2 that is set to the H level in power flow reversal. A comparator 343 receives input of the direct current voltage Vds, calculates a change *dVds*/*dt* per unit time, and compares to a preset threshold. When *dVds*/*dt* is not less than the threshold, the comparator 343 transitions to the H level.

In the embodiment, the level of the fluctuation of the direct current voltage and the operating states of the power conversion devices 310 and 350 are predefined; therefore, the switching of the control loops can be reliably performed, and a smooth operation of the system is possible.

### (Fourth embodiment)

FIG. 6 is a block diagram illustrating a power conversion device according to the embodiment.

As shown in FIG. 6, a direct current power transmission system 401 includes power conversion devices 410 and 450. The power conversion device 410 includes a control device 430. The control device 430 includes an AVR 431. In the embodiment, the AVR 431 differs from those of the other embodiments described above in that the AVR 431 includes an arithmetic unit 437 and limiter setters 444 and 445. Also, the AVR 431 differs from those of the other embodiments described above in that the AVR 431 includes an adder 446.

In the embodiment, a controller 432 that forms a fast control loop includes the arithmetic unit 437. The arithmetic unit 437 includes limiters. The limiters of the arithmetic unit 437 are set to different limit values according to the outputs of the limiter setters 444 and 445. The outputs of the limiter setters 444 and 445 are set according to the magnitude of the deviation ΔVd output from an adder-subtracter 236. The limiter setter 444 sets a positive limit value. The limiter setter 445 sets a negative limit value.

More specifically, when the deviation ΔVd is less than a preset threshold, the limiter setter 444 sets zero as the limit value. When the deviation ΔVd is not less than the threshold, the limiter setter 444 sets a positive limit value that is set according to the output dynamic range of the arithmetic unit 437, etc.

When the absolute value of the deviation ΔVd is less than the threshold, the limiter setter 445 sets zero as the limit value. When the absolute value of the deviation ΔVd is not less than the threshold, the limiter setter 445 sets a negative limit value that is set according to the output dynamic range of the arithmetic unit 437, etc.

When the absolute value of the deviation ΔVd that is input is less than the threshold, the output of the arithmetic unit 437 is zero because the limiter setters 444 and 445 set the limiter of the arithmetic unit 437 to zero. The output of the controller 432 is added to the output of a controller 433 by the adder 446; therefore, when the magnitude of the deviation ΔVd is small, the output of the controller 433 that forms the slow control loop is supplied to the phase controller 40.

When the absolute value of the deviation ΔVd that is input to the limiter setters 444 and 445 is not less than the threshold, the arithmetic unit 437 can output up to the limit values set by the limiter setters 444 and 445. Therefore, the output of the controller 432 that forms the fast control loop is supplied to the phase controller 40. The output of the controller 432 includes addition of the output of the controller 233 by the adder 446. In other words, the output of the controller 432 that forms the fast control loop is corrected by the output of the controller 233 that forms the slower control loop.

The smaller limit value for the limiter setters 444 and 445 is not limited to zero, and it is sufficient to be a sufficiently small value compared to the larger limit value. For example, the smaller limit value may be a value that has about one or two fewer digits than the larger limit value.

In the embodiment, a highly accurate voltage control is performed by the slow control loop of the controller 433 when the fluctuation of the direct current voltage is small. When the fluctuation of the direct current voltage is large, a fast and stable operation is performed by forming the fast control loop of the controller 432 while ensuring the voltage accuracy by using the controller 433.

Hereinabove, embodiments of the invention are described with reference to specific examples. However, the invention is not limited to these specific examples. For example, one skilled in the art may similarly practice the invention by appropriately selecting specific configurations of components such as the power converter, the control device, etc., from known art, and such practice is within the scope of the invention to the extent that similar effects can be obtained.

Also, combinations of any two or more components of the specific examples within the extent of technical feasibility also are within the scope of the invention to the extent that the spirit of the invention is included.

Furthermore, all power conversion devices practicable by an appropriate design modification by one skilled in the art based on the power conversion devices described above as embodiments of the invention also are within the scope of the invention to the extent that the spirit of the invention is included.

Also, various modifications and alterations within the spirit of the invention will be readily apparent to those skilled in the art, and all such modifications and alterations should be seen as being within the scope of the invention.

Although several embodiments of the invention are described, these embodiments are presented as examples and are not intended to limit the scope of the invention. These novel embodiments may be implemented in other various forms, and various omissions, substitutions, and modifications can be performed without departing from the spirit of the invention. Such embodiments and their modifications are within the scope and spirit of the invention and are within the scope of the invention described in the claims and their equivalents.

## Claims

1. A control device capable of controlling a power converter connected to one terminal of a direct current power transmission system transmitting power by a direct current power line, and capable of receiving, via a communication network, data of a direct current voltage actually measured at an other terminal of the direct current power transmission system, the control device comprising:
a first controller including a first arithmetic unit generating a first control output based on a voltage drop, a voltage command value, and a first direct current voltage, the voltage drop being with respect to a voltage of the other terminal estimated based on an estimated value of a direct current resistance of the direct current power line, the voltage command value setting a direct current voltage of the other terminal, the first direct current voltage being a direct current voltage of the one terminal;
a second controller including a second arithmetic unit generating a second control output based on the voltage command value and a second direct current voltage, the second direct current voltage being a direct current voltage actually measured at the other terminal; and
a drive signal generator generating a drive signal of the power converter based on the first and second control outputs,
a response speed of the second arithmetic unit being set according to a transmission delay time of the communication network,
a response speed of the first arithmetic unit being set to be faster than the response speed of the second arithmetic unit.

2. The control device according to claim 1, wherein
the first control output is corrected using the second control output.

3. The control device according to claim 2, wherein
the second control output corrects the first control output by being input to the first arithmetic unit.

4. The control device according to claim 2, wherein
the first arithmetic unit:
sets a magnitude of an output of the first arithmetic unit to a prescribed amplitude when a magnitude of a signal that is input is not less than a prescribed threshold; and
includes an output limiter set to a greater value than the prescribed amplitude when the magnitude of the signal that is input is less than the threshold, and
the second control output is added to the first control output in the output of the first arithmetic unit.

5. The control device according to claim 1, wherein
the first control output and the second control output are used by being switched based on a preset condition.

6. The control device according to claim 5, wherein
the preset condition is set based on a deviation between a preset direct current voltage command value and the second direct current voltage.

7. The control device according to claim 5, wherein
the preset condition is set based on a change of a magnitude per unit time of the second direct current voltage.

8. The control device according to claim 5, wherein
the preset condition is set based on a designation supplied from an external part.

9. A power conversion device, comprising:
a power converter mutually converting an alternating current voltage and a direct current voltage; and
the control device according to claim 1.
